# EUROPÄISCHE PATENTSCHRIFT

(11) **EP 3 174 801 B1**
(45) Veröffentlichungstag und Bekanntmachung des Hinweises auf die Patenterteilung: **11.04.2018**
(21) Anmeldenummer: 15754110.3
(22) Anmeldetag: 29.07.2015
(51) Int. Cl.: B65B 37/06, B65B 37/20, B65B 39/00, B65B 43/59, B65B 3/12, B65B 3/32, G01F 11/02, G01F 11/04, G01F 11/16

(54) **VERFAHREN ZUR VERPACKUNG VON FLÜSSIGEN ODER PASTÖSEN PRODUKTEN SOWIE HIERFÜR GEEIGNETE VERPACKUNGSMASCHINE**
METHOD FOR PACKAGING LIQUID OR PASTY PRODUCTS AND PACKAGING MACHINE SUITABLE FOR THIS PURPOSE
PROCÉDÉ D'EMBALLAGE DE PRODUITS LIQUIDES OU PÂTEUX ET MACHINE D'EMBALLAGE PRÉVUE À CET EFFET

(30) Priorität: 30.07.2014 DE 102014011075
(43) Veröffentlichungstag der Anmeldung: 07.06.2017
(73) Patentinhaber: Benhil GmbH, 41468 Neuss (DE)
(72) Erfinder: FRANZ, Maik, 41239 Mönchengladbach (DE)
(74) Vertreter: Lenz, Steffen
(86) Internationale Anmeldenummer: PCT/EP2015/001559
(87) Internationale Veröffentlichungsnummer: WO 2016/015861

(56) Entgegenhaltungen:
- WO-A1-01/14209
- WO-A2-2008/116526
- DE-A1- 2 824 680
- DE-A1- 19 801 405

## Beschreibung

Die Erfindung betrifft ein Verfahren zur portionierten Verpackung von flüssigen und/oder pastösen Produkten mittels einer Verpackungsmaschine, indem das Produkt über wenigstens einen Einlass einer Dosierkammer aufgegeben, in der Dosierkammer mittels wenigstens eines Dosierorgans mit einem in Axialrichtung der Dosierkammer verlagerbaren Dosierkolben zu wenigstens einer Produktportion dosiert und die wenigstens eine Produktportion über wenigstens einen Dosierauslass einer Verpackung aufgegeben wird, wobei die Dosierkammer in zumindest einem Betriebszustand der Verpackungsmaschine aus der Gruppe
- Stillstandszeiten der Verpackungsmaschine,
- Inbetriebnahme der Verpackungsmaschine und
- Betrieb der Verpackungsmaschine
im Durchfluss betrieben wird, indem das Produkt der Dosierkammer gänzlich oder anteilig über wenigstens einen Auslass abgeführt und rezirkuliert wird. Die Erfindung bezieht sich ferner auf eine insbesondere zur Durchführung eines solchen Verfahrens geeignete Verpackungsmaschine zur portionierten Verpackung von flüssigen und/oder pastösen Produkten, mit wenigstens einer Dosierkammer mit wenigstens einem Einlass, um das Produkt der Dosierkammer aufzugeben, wenigstens einem in der Dosierkammer angeordneten Dosierorgan mit einem in Axialrichtung der Dosierkammer verlagerbaren Dosierkolben zur Dosierung wenigstens einer Produktportion und mit wenigstens einem Dosierauslass, um die Produktportion einer Verpackung aufzugeben, wobei die Dosierkammer ferner wenigstens einen Auslass aufweist, welcher in eine Rezirkulationsleitung mündet, wobei das Produkt über den wenigstens einen Einlass der Dosierkammer zuführbar und gänzlich oder anteilig über den wenigstens einen Auslass in die Rezirkulationsleitung abführbar ist.

Verpackungsmaschinen der vorgenannten Art sind insbesondere zur Verpackung von dosierten Produktportionen pastöser Produkte, wie beispielsweise Butter, Margarine und dergleichen, bekannt und bei dem Gewerbebetrieb der Anmelderin unter dem Handelsnamen "M8000" kommerziell erhältlich. Derartige Verpackungsmaschinen weisen eine oder auch mehrere, parallel angeordnete Dosierkammern auf, welchen das pastöse Produkt über (je) einen Einlass taktweise zugeführt wird. In der bzw. den Dosierkammer(n) befindet sich ein Dosierorgan, beispielsweise in Form eines axial verlagerbaren Kolbens, welches das pastöse Produkt aus der zuvor befüllten Dosierkammer über einen Dosierauslass derselben auszubringen vermag, wonach die dosierte Produktportion einer Verpackung, wie z.B. einem nach oben offenen Zuschnitt eines Einwicklers, einem Becher der dergleichen, aufgegeben wird, welche z.B. in unterhalb des Dosierauslasses der Dosierkammer angeordneten Hubzellen an der Dosierkammer vorbeigeführt wird. Solche Verpackungsmaschinen haben sich nicht zuletzt aufgrund ihrer hohen Robustheit und Leistungsfähigkeit auch zur Verpackung von pastösen Produkten aus dem Lebensmittelbereich, welche hohen Anforderungen an die Hygiene zu genügen haben, bestens bewährt.

Indes hat sich gezeigt, dass manche pastösen Produkte im Ruhezustand zu einem relativ schnellen Auskristallisieren neigen, wobei beispielhaft einige Margarinesorten angesprochen seien, bei welchen sich insbesondere im erwärmten, gering viskosen bis flüssigen Zustand die Öl-in-Wasser-Emulsion sehr schnell entmischt und sich Öl- bzw. Fettkristalle bilden, welche nicht (mehr) in dem wässrigen "Lösungsmittel" gelöst sind. Ähnliches gilt z.B. für Eiscreme bzw. Speiseeis, wenn im Ruhezustand, d.h. wenn die pastöse Masse nicht gerührt oder anderweitig bewegt wird, vornehmlich die wässrige Phase auskristallisiert.

Ferner hat sich gezeigt, dass sich das vorgenannte Problem bei gattungsgemäßen Verpackungsmaschinen darin manifestieren kann, dass es im Falle der Verarbeitung von derlei, hinsichtlich eines Entmischens bzw. Auskristallisierens sehr empfindlicher Produkte insbesondere bei vorübergehenden, auch kurzzeitigen Stillstandszeiten der Verpackungsmaschine oder beim Wiederanfahren derselben zu Fehldosierungen und/oder mangelhaften Produktportionen kommt, welche ausgeschleust und entsorgt werden müssen, weil die in der Verpackungsmaschine zurückgebliebenen Produktreste nicht mehr die erforderliche Qualität besitzen. Folglich sollte die Verpackungsmaschine vor jeder Inbetriebnahme bzw. vor jedem Anfahren gänzlich gespült werden, was aufwändig ist und zu unerwünschten Stillstandszeiten führt. Entsprechendes kann bei einer sehr langsamen Dosierung und einer damit einhergehenden, sehr langsamen Produktzuführung in die Dosierkammer der Fall sein, wobei langsame Dosierungen andererseits erforderlich sein können, sofern das pastöse Produkt auch gegen die in der Dosierkammer durch das Dosierorgan auf dieses bewirkten mechanischen Kräfte empfindlich ist. Andererseits sollte die Verpackungsmaschine aber gleichwohl einfach und schnell zu reinigen sein, ohne sie in aufwändiger Weise demontieren bzw. wieder montieren zu müssen. Dabei sollte der konstruktive Aufbau der Verpackungsmaschine insbesondere ein sogenanntes "Cleaning in Place" ("CIP") ermöglichen, um beispielsweise im Falle von Produktwechseln oder auch aus hygienischen Gründen in regelmäßigen Abständen zumindest die mit dem Produkt in Berührung tretenden Komponenten der Verpackungsmaschine vor Ort reinigen zu können.

Die US 3 979 012 A beschreibt gattungsgemäße Verpackungsmaschine, welche insbesondere zur Verpackung von zu einer Auskristallisation neigenden, empfindlichen pastösen Produkten, wie Margarine, vorgesehen ist. Die bekannte Verpackungsmaschine umfasst zwei Dosierorgane in Form zweier Dosierkolben, welche in je einem Drehschieber, welcher die Dosierkammer bildet, in Axialrichtung des Drehschiebers verlagerbar sind. Die Dosierkammern der Drehschieber münden in ein gemeinsames Auslassmundstück, an dessen auslassseitigem Ende ein Auslass-Drehventil angeordnet ist. Um das Produkt während des Betriebs stets in Bewegung zu halten und auf diese Weise einem unzeitigen Auskristallisieren zu begegnen, wird es stets im Kreislauf geführt, wobei die Kreislaufleitung einen Leitungsabschnitt aufweist, von wo das Produkt in die diesem Leitungsabschnitt nachgeordneten Drehschieber gelangt, um es durch Verlagerung der hierin verschieblich geführten Dosierkolben über das Auslassmundstück einer Verpackung aufzugeben. Folglich besteht insbesondere während Stillstandszeiten der Verpackungsmaschine, z.B. in der Nacht, oder auch bei nur kurzen Betriebsunterbrechungen nach wie vor das Problem, dass das Produkt in den die Dosierkammern bildenden Drehschiebern auskristallisiert, woraufhin die Drehschieber gänzlich demontiert, gereinigt und wieder montiert werden müssen, weil auch eine "CIP"-Reinigung vor Ort nicht möglich ist. Letzteres ist vornehmlich dadurch bedingt, dass die Drehschieber weder in der Position, in welcher sie gegen den Leitungsabschnitt der Kreislaufleitung öffnen, noch in der Position, in welcher sie gegen das Auslassmundstück öffnen, mit einem Reinigungsmedium durchspült werden können, zumal das Produkt auch zwischen die stets mit diesem in Berührung stehende äußere Mantelfläche der Drehschieber und deren Lagerschalen gelangt, die im montierten Zustand überhaupt nicht gereinigt werden können.

Entsprechendes gilt weitestgehend für eine aus der WO 2007/118676 A1 bekannte Dosiereinrichtung für flüssige oder pastöse Produkte, welche unter anderem in Verpackungsmaschinen zum Einsatz gelangen kann. Ähnlich wie bei der vorgenannten US-Schrift weist die Dosiereinrichtung einen Leitungsabschnitt auf, welcher stets mit dem Produkt durchströmt wird, wobei eine Dosierkammer in Radialrichtung von dem Leitungsabschnitt abzweigt. Das Dosierorgan ist in diesem Fall in dem Leitungsabschnitt angeordnet und umfasst einen Dosierkolben mit einer Kolbenstange, welche hohl ausgebildet ist und an ihrem freien Ende eine Einlassöffnung zur Aufgabe eines Sterilisierungsmittels aufweist, sowie eine gleichfalls hohle Ventilspindel, welche die Kolbenstange außen- bzw. umfangsseitig umgibt. Der innerhalb der Ventilspindel gelegene Bereich der Dosiereinrichtung kommt mit dem Produkt nicht in Kontakt und dient ausschließlich der Zugabe des Sterilisierungsmittels bei jedem Dosiervorgang. Anlässlich eines Dosiervorgangs wird ein außenseitig an der Ventilspindel angeordneter Ventilkörper am Mündungsbereich des Abzweigs des Leitungsabschnittes in die Dosierkammer in dichtende Anlage gebracht und wird der Dosierkolben in die Dosierkammer hinein geschoben, um die dort befindliche Produktportion aus der Dosierkammer herauszupressen. Davon abgesehen, dass die bekannte Dosiereinrichtung aufgrund der fest vorgegebenen Größe der Dosierkammer nur eine entsprechende, fest vorgegebene Produktportion zu dosieren vermag, ergibt sich auch in diesem Fall - sofern empfindliche Produkte der oben genannten Art verarbeitet werden sollen - insbesondere der Nachteil, dass auch bei kurzen Stillstandszeiten das Produkt in der Dosierkammer auskristallisiert, woraufhin die Dosierkammer gereinigt werden muss.

Die GB 2 450 955 A beschreibt einen Dispenser zur Dosierung von fluiden Stoffen, welcher ein oder mehrere Dosierorgane aufweist. Sofern mehrere Dosierorgane vorgesehen sind, sind diese in jeweils einem Leitungsabschnitt einer produktführenden Leitung angeordnet, deren beiden entgegengesetzten Enden das Produkt aufgegeben wird, so dass die jeweils äußeren Dosierorgane von einem für das innere Dosierorgan vorgesehenen Teilstrom des Produktes passiert werden. Ein jedes Dosierorgan dosiert sodann eine gewünschte Produktportion, bevor diese über je einen Dosierauslass entnommen wird. Die Dosierorgane sind in Form einer Art Kolben-/Zylinderanordnung angeordnet, welche in den produktführenden Leitungsabschnitt hineinragen. Eine Verarbeitung von insbesondere gegenüber einer schnellen Kristallisation empfindlicher Produkte der oben genannten Art ist mittels des bekannten Dispensers indes aus mehreren Gründen nicht möglich. So werden zwar einerseits einige - die äußeren - Dosierorgane aufgrund deren Reihenschaltung im Durchstrom betrieben werden, doch lässt sich ein gewünschter Teilstrom, welcher diese Dosierorgane passiert, nicht einstellen, da er durch das notwendige Dosiervolumen des mittleren Dosierorgans, welches nicht im Durchfluss betrieben werden kann, fest vorgegeben ist. Andererseits käme es bei auch nur kurzen Stillstandszeiten des Dispensers unmittelbar zu einem Auskristallisieren des hiergegen empfindlichen Produktes, weil letzteres dem mit den Dosierorganen bestückten Leitungsabschnitt ausschließlich über die Dosierauslässe entnommen werden kann, von wo aus es verworfen werden müsste.

In der WO 01/14209 A1 geht es schließlich um einen zur dosierten Abgabe von viskosen Lebensmitteln vorgesehenen, hygienischen Dispenser, bei welchem die Lebensmittel während des Betriebs sowie während Standzeiten stets in kontinuierlichem Fluss gehalten werden sollen. Der Dispenser weist eine Dosierkammer auf, welche einen Zylinder mit einem hierin axial verlagerbaren Kolben als Dosierorgan aufnimmt. Das flüssige oder viskose Produkt gelangt über einen eingangsseitigen Durchlass in den Dispenser hinein und von dort über ein Einlassventil in die Dosierkammer, wo es mittels des Kolbens dosiert wird. Sodann verlässt es die Dosierkammer über ein in Radialrichtung neben dem Einlassventil angeordnetes Auslassventil und gelangt in einen parallel zu dem eingangsseitigen Durchlass angeordneten ausgangsseitigen Durchlass, welcher mit einer oder mehreren Dosierspitzen in Verbindung steht, welche austauschbar in den ausgangsseitigen Durchlass eingesteckt sind. Der ausgangsseitige Durchlass mündet schließlich stromab der mit dem Dosierkolben versehenen Dosierkammer in eine Rezirkulationsleitung, wobei das flüssig-viskose Lebensmittel gänzlich oder teilweise rezirkuliert werden kann, indem nur ein Produktanteil aus dem ausgangsseitigen Durchlass in die Dosierspitzen überführt wird, während das restliche Produkt stromab des ausgangsseitigen Durchlasses in die Rezirkulationsleitung gelangt und von dort wieder dem eingangsseitigen Durchlass aufgegeben wird. Als nachteilig erweist sich indes einerseits, dass eine Produktzirkulation durch die Dosierkammer hindurch während Stillstandszeiten des Dispensers nur dann möglich wäre, wenn der Dosierkolben fortwährend in Betrieb bliebe, weil der Kolbenhub zum Pumpen des Produktes durch die Dosierkammer zwingend erforderlich ist, was wiederum bedeutet, dass die Einstellung eines gewünschten Verhältnisses an dosiertem und rezirkuliertem Produkt nicht möglich ist. Andererseits erlaubt der bekannte Dispenser keine sogenannte CIP-Reinigung, anlässlich welcher er mittels eines Reinigungsfluides gespült werden könnte, ohne ihn demontieren zu müssen. Letzteres ist dadurch bedingt, dass der an seiner unteren Stirnseite mit dem in der Dosierkammer befindlichen Produkt in Kontakt tretende Dosierkolben, sofern die Dosierkammer einschließlich ihrer Zu- und Abführleitungen mit einem Reinigungsfluid gespült wird, auch mit dem Reinigungsfluid nur mit seiner unteren Stirnseite in Kontakt treten kann, so dass Produktreste, welche sich nach mehreren Kolbenhüben radial zwischen dem Dosierkolben und der Umfangswand der Dosierkammer angereichert haben, nicht vollständig entfernt werden können, wie es jedoch für Lebensmittelanwendungen zwingend erforderlich wäre.

Der Erfindung liegt die Aufgabe zugrunde, ein Verfahren zur portionierten Verpackung von flüssigen und/oder pastösen Produkten der eingangs genannten Art sowie eine insbesondere zur Durchführung eines solchen Verfahrens geeignete, gattungsgemäße Verpackungsmaschine auf einfache und kostengünstige Art dahingehend weiterzubilden, dass dem Problem eines Auskristallisierens empfindlicher Produkte unter zumindest weitestgehender Vermeidung der vorgenannten Nachteile wirksam begegnet werden kann, wobei insbesondere auch eine einfache "CIP"-Reinigung gewährleistet sein sollte.

In verfahrenstechnischer Hinsicht wird diese Aufgabe bei einem Verfahren der eingangs genannten Art dadurch gelöst, dass die Dosierkammer in axialer Richtung mit dem Produkt durchströmt wird, indem es ihrem wenigstens einen Ende über den wenigstens einen Einlass aufgegeben und ihrem anderen Ende über den wenigstens einen Auslass abgeführt wird, wobei das Produkt durch einen zwischen dem wenigstens einen, in der Dosierkammer befindlichen Dosierorgan und der inneren Umfangswand der Dosierkammer gebildeten Ringspalt an dem wenigstens einen Dosierorgan vorbei geführt wird, so dass es das Dosierorgan umspült.

In vorrichtungstechnischer Hinsicht sieht die Erfindung zur Lösung dieser Aufgabe bei einer Verpackungsmaschine der eingangs genannten Art überdies vor, dass der wenigstens eine Einlass und der wenigstens eine Auslass an in axialer Richtung entgegengesetzten Enden der Dosierkammer angeordnet sind, wobei das wenigstens eine Dosierorgan mit einem radialen Abstand von der Umfangswand der Dosierkammer angeordnet ist, so dass das Produkt durch einen zwischen dem wenigstens einen, in der Dosierkammer befindlichen Dosierorgan und der inneren Umfangswand der Dosierkammer gebildeten Ringspalt an dem wenigstens einen Dosierorgan vorbei führbar ist.

Die erfindungsgemäße Ausgestaltung, gemäß welcher das Produkt - sei es gänzlich oder im Teilstrom - der Dosierkammer über zumindest einen, zusätzlich zu dem Dosierauslass bzw. zu den Dosierauslässen vorgesehenen Auslass abgeführt und rezirkuliert wird bzw. gemäß welcher die Dosierkammer zusätzlich zu dem wenigstens einen Dosierauslass zumindest einen (weiteren), in eine Rezirkulationsleitung mündenden Auslass besitzt, macht es auf einfache Weise möglich, auch hochempfindliche pastöse Produkte in kritischen Betriebszuständen der Verpackungsmaschinen, bei welchen die Gefahr einer (zu) geringen Agitation bzw. Bewegung des Produktes und folglich einer Entmischung bzw. Kristallisation desselben besteht (z.B. während Stillstandszeiten, bei der Inbetriebnahme oder bei einem insbesondere mit einer langsamen Produktzuführung einhergehenden Betrieb), während solcher Betriebsphasen zumindest in einem mehr oder minder beliebig auswähl- und voreinstellbaren Teilstrom bis hin zum Gesamt-Produktstrom durch die Dosierkammer hindurch zu fördern, so dass das Produkt stets in einem einwandfrei homogenisierten Zustand gehalten werden kann und etwaige Spülungen der Verpackungsmaschine auf das hygienisch erforderliche Mindestmaß reduziert werden können. Wie weiter unten noch näher erläutert, passiert das pastöse Produkt dabei gänzlich oder anteilig die gesamte Dosierkammer einschließlich deren Ein- und Auslassleitungen, wobei ein möglicher Totraum für etwaige Produktreste lediglich stromab des Dosierauslasses bzw. der Dosierauslässe, wie z.B. in einem Auslassventil und/oder in einer Dosierspitze, gebildet ist, welche jedoch erforderlichenfalls einfach und schnell separat gereinigt werden können, ohne dass es einer Reinigung bzw. Spülung der gesamten, mit den Produkt in Berührung kommenden Maschinenteile und insbesondere einer Demontage derselben bedarf. Der aus dem Auslass abgeführte Produkt(teil)strom wird sodann rezirkuliert, so dass das Produkt insbesondere im Kreislauf geführt werden kann und jener Produktanteil, welcher zum bloßen "Durchfluss" durch die Dosierkammer hindurch vorgesehen ist, wiederverwendet werden kann. Mit "Inbetriebnahme der Verpackungsmaschine" ist in diesem Zusammenhang um Übrigen nicht notwendigerweise die erste Inbetriebnahme nach deren Installation angesprochen, sondern jede, auf eine beliebige Stillstandszeit folgende Inbetriebnahme einschließlich eines Anfahrens bzw. Wiederanfahrens der Verpackungsmaschine nach relativ kurzen Stillstandzeiten, z.B. nach einer Reinigung, einem Produktwechsel oder nach vorübergehendem Stillstand bei nicht vollständigem Auslastungsbedarf, z.B. während der Nacht. Die Anordnung des Dosierorgans im Innern der Dosierkammer sorgt dabei auch für eine ständige Umströmung des Dosierorgans mit dem Produktstrom, so dass es auch dort weder während des Normalbetriebs noch während Stillstandszeiten der Verpackungsmaschine zu einer Bildung von Produktrückständen kommt, welche sich entmischen und/oder auskristallisieren könnten.

Die erfindungsgemäße Ausgestaltung ermöglicht folglich auch eine einfache Reinigung nach Art eines sogenannten "Cleaning in Place" ("CIP"), ohne Teile der Zu- und Ableitungen und insbesondere die Dosierorgane demontieren zu müssen, weil die Dosierkammer mit dem hierin angeordneten Dosierorgan erforderlichenfalls auch mit einer Reinigungslösung anstelle des Produktes durchspült werden kann.

Um für eine besonders wirksame "Spülung" der Dosierkammer mit dem Produktstrom zu sorgen, ohne dass die Gefahr einer lokalen Anreicherung von abgelagerten bzw. abgesetzten Produktresten besteht, sieht die Erfindung vor, dass die Dosierkammer in axialer Richtung mit dem Produkt durchströmt wird, indem es ihrem wenigstens einen Ende über den wenigstens einen Einlass aufgegeben und ihrem anderen Ende über den wenigstens einen Auslass abgeführt wird. In vorrichtungstechnischer Hinsicht bedeutet dies, dass der wenigstens eine Einlass und der wenigstens eine Auslass an in axialer Richtung entgegengesetzten Enden der Dosierkammer angeordnet sind. Hierdurch ergibt sich zugleich die Möglichkeit einer sehr gründlichen "CIP"-Reinigung, weil die Dosierkammer aufgrund der unter Höhenversatz angeordneten Ein- und Auslässe stets in Axialrichtung mit einer Reinigungslösung durchspült werden kann, so dass das Dosierorgan gleichfalls in seiner Wirkrichtung mit einer solchen Reinigungslösung durchspült werden kann.

Um auch während des Betriebs eine Durchströmung der Dosierkammer mit einem Teilstrom des der Dosierkammer zugeführten, aber nicht über den wenigstens einen Dosierauslass dosierten Produktes zu ermöglichen, ist das wenigstens eine Dosierorgan ferner erfindungsgemäß mit einem radialen Abstand von der Umfangswand der Dosierkammer angeordnet. Zwischen dem wenigstens einen, in der Dosierkammer befindlichen Dosierorgan und der inneren Umfangswand der Dosierkammer ist folglich ein Ringspalt vorgesehen, durch welchen das Produkt von dem wenigstens einen Einlass zu dem wenigstens einen Auslass hindurchströmen kann, indem es das Dosierorgan umspült. Eine solche Ausgestaltung erweist sich auch im Hinblick auf eine gründliche "CIP"-Reinigung als vorteilhaft, da das in der Dosierkammer angeordnete Dosierorgan dann in Wirkrichtung desselben mit einer Reinigungslösung sowohl durch- als auch insbesondere umspült werden kann.

Um bei beliebigen Betriebszuständen der Verpackungsmaschine stets die Gefahr einer Produktbeeinträchtigung infolge eines Entmischens bzw. Auskristallisierens aufgrund von lokalen Produktanreicherungen zuverlässig auszuräumen, kann in vorteilhafter Ausgestaltung vorgesehen sein, dass die Dosierkammer sowohl während Stillstandszeiten und/oder bei Inbetriebnahme - einschließlich (Wieder)anfahren - der Verpackungsmaschine als auch während des Betriebs der Verpackungsmaschine im Durchfluss betrieben wird. Dabei kann insbesondere vorgesehen sein, dass beispielsweise während Stillstandszeiten und/oder bei Inbetriebnahme der Verpackungsmaschine der gesamte, der Dosierkammer über deren wenigstens einen Einlass zugeführte Produktstrom an dem wenigstens einen Dosierorgan vorbei wieder über deren erfindungsgemäßen Auslass abgeführt und rezirkuliert wird (gänzlicher Durchstrom), während z.B. beim Betrieb der Verpackungsmaschine der Dosierkammer über ihren wenigstens einen Einlass ein größerer Produktstrom aufgegeben wird als über den wenigstens einen Dosierauslass dosiert werden soll und der Differenzstrom wiederum an dem wenigstens einen Dosierorgan vorbei über deren erfindungsgemäßen Auslass abgeführt und rezirkuliert wird (teilweiser Durchstrom).

In Bezug auf die Durchströmung der Dosierkammer in axialer Richtung kann vorzugsweise vorgesehen sein, dass das Produkt dem unteren und/oder dem wenigstens einen Dosierauslass zugewandten Ende der Dosierkammer über den wenigstens einen Einlass aufgegeben und dem oberen und/oder dem wenigstens einen Dosierauslass abgewandten Ende der Dosierkammer über den wenigstens einen Auslass abgeführt wird. In vorrichtungstechnischer Hinsicht kann zu diesem Zweck vorgesehen sein, dass der wenigstens eine Einlass an dem unteren und/oder dem wenigstens einen Dosierauslass zugewandten Ende und der wenigstens eine Auslass an dem oberen und/oder dem wenigstens einen Dosierauslass abgewandten Ende der Dosierkammer angeordnet sind.

Wie bereits angedeutet, kann aus den genannten Gründen in vorteilhafter Ausgestaltung vorgesehen sein, dass der Dosierkammer während des Betriebs, insbesondere im Wesentlichen kontinuierlich, ein größerer Produktstrom über den wenigstens einen Einlass aufgegeben wird als ihr über den wenigstens einen Dosierauslass portioniert abgeführt wird, wobei der Anteil des der Dosierkammer aufgegebenen Produktstromes, welcher ihr nicht über den wenigstens einen Dosierauslass portioniert abgeführt wird, über den wenigstens einen, zusätzlich zu dem/den Dosierauslass/-auslässen vorgesehenen Auslass abgeführt und rezirkuliert wird. Auf diese Weise ergibt sich auch während des "normalen" Betriebs der Verpackungsmaschine ein stetiger Produktstrom durch die Dosierkammer hindurch.

Wie bereits erwähnt, kann der gewünschte Anteil des der Dosierkammer aufgegebenen Produktstroms, welcher ihr über den wenigstens einen Auslass abgeführt und rezirkuliert wird, - also derjenige Teilstrom, welcher die Dosierkammer durchströmt, ohne dosiert zu werden -, praktisch beliebig voreingestellt werden, um den Anforderungen des jeweils verarbeiteten Produktes zu begegnen. Hierbei hat es sich beispielsweise als zweckmäßig erwiesen, wenn zwischen etwa 1 Mass.-% und etwa 20 Mass.-%, insbesondere zwischen etwa 2 Mass.-% und etwa 10 Mass.-%, des der Dosierkammer über deren wenigstens einen Einlass zugeführten Produktstromes an dem wenigstens einen Dosierorgan vorbei wieder über den wenigstens einen Auslass abgeführt werden, während zwischen etwa 80 Mass.-% und etwa 99 Mass.-%, insbesondere zwischen etwa 90 Mass.-% und etwa 98 Mass.-%, des zugeführten Produktstromes mittels des wenigstens einen Dosierorgans dosiert und portioniert über den wenigstens einen Dosierauslass einer (jeweiligen) Verpackung aufgegeben werden.

In vorteilhafter Ausgestaltung kann in vorrichtungstechnischer Hinsicht ferner vorgesehen sein, dass das wenigstens eine Dosierorgan mit einem gegenüber dem Gesamtquerschnitt der Dosierkammer kleinen radialen Abstand von der Umfangswand der Dosierkammer angeordnet ist.

Das Dosierorgan kann vorzugsweise einerseits einen in Axialrichtung der Dosierkammer verlagerbaren Dosierzylinder, dessen freie Stirnseite in einer Dosierposition mit einem Umfangsabschnitt des wenigstens einen Dosierauslasses in dichtenden Kontakt bringbar ist, und andererseits einen in dem Dosierzylinder in Axialrichtung verlagerbaren Dosierkolben aufweisen. Der Dosierzylinder eines jeweiligen Dosierorgans ist folglich im Innern der während des Betriebs mit Produkt befüllten Dosierkammer zwischen einer Dosierposition, in welcher er den Dosierauslass dichtend umgibt, und einer Ansaugposition, in welcher er mit axialem Abstand von dem Dosierauslass angeordnet ist, verlagerbar, während der Dosierkolben im Innern des Dosierkolbens gleichfalls in Axialrichtung verlagerbar ist, um in dessen Dosierposition die gewünschte Produktportion über den jeweiligen Dosierauslass aus der Dosierkammer ausbringen zu können.

Darüber hinaus kann es bei einem solchen Dosierorgan hinsichtlich einer einfachen Reinigung bzw. Spülung, wie insbesondere einer "CIP"-Reinigung, der Verpackungsmaschine von Vorteil sein, wenn
- der im Innern der Dosierkammer angeordnete Dosierkolben des wenigstens einen Dosierorgans in eine Position außerhalb des Dosierzylinders und/oder
- der im Innern der Dosierkammer angeordnete Dosierzylinder des wenigstens einen Dosierorgans in eine Position, in welcher er sowohl radial als auch axial gänzlich von den Wandungen der Dosierkammer mit Abstand angeordnet ist, bringbar ist bzw. sind, so dass alle Komponenten des/der Dosierorgans/Dosierorgane gänzlich von einem Reinigungsmittel umspült werden können, wenn ein solches durch die Dosierkammer hindurch geleitet wird.

In Weiterbildung des erfindungsgemäßen Verfahrens kann in vorteilhafter Ausführung ferner vorgesehen sein, dass der Anteil des der Dosierkammer über den wenigstens einen Auslass abgeführten Produktstromes in einem dem wenigstens einen Auslass nachgeordneten Volumenkompensator gepuffert wird. Auf diese Weise ist es möglich, den aufgrund der Dosiervorgänge, anlässlich derer Produktportionen taktweise bzw. semikontinuierlich mittels des wenigstens einen Dosierorgans aus dem wenigstens einen Dosierauslass heraus in eine jeweilige Verpackung überführt werden, an dem wenigstens einen Auslass der Dosierkammer nicht kontinuierlich anfallenden Teilstrom an Produkt, welcher während des Dosierbetriebs die Dosierkammer durchströmt, in dem Volumenkompensator zu puffern, d.h. zwischenzuspeichern, so dass dieser Teilstrom stromab des Volumenkompensators kontinuierlich weiter gefördert und rezirkuliert werden kann.

In vorrichtungstechnischer Hinsicht sieht eine erfindungsgemäße Verpackungsmaschine folglich vorzugsweise vor, dass dem wenigstens einen Auslass ein - insbesondere in der Rezirkulationsleitung angeordneter - Volumenkompensator nachgeordnet ist, um das aus der Dosierkammer über den wenigstens einen Auslass abgeführte Produkt zu puffern bzw. zwischenzuspeichern. Der Volumenkompensator kann dabei beispielsweise eine Kolben-/Zylindereinheit umfassen, deren Kolben in Bezug auf den Zylinder verlagerbar ist, um das Volumen des Volumenkompensators zu verändern. Durch axiale Verlagerung des Kolbens relativ zu dem Zylinder ist das Volumen desselben folglich entsprechend dem gerade aus dem wenigstens einen Auslass der Dosiereinheit abgeführten Produkt(teil)strom veränderbar. Dies kann beispielsweise dadurch geschehen, indem eine fluidisch, z.B. pneumatisch, druckbeaufschlagte Kolben-/Zylindereinheit zum Einsatz kommt, deren Druckbeaufschlagung zugleich zur Einstellung des gewünschten Druckes in der Dosierkammer dienen kann. In Bezug auf eine einfache Reinigung bzw. Spülung, insbesondere nach Art eines "CIP", des in Form einer Kolben-/Zylindereinheit ausgestalteten Volumenkompensators kann es dabei ferner von Vorteil sein, wenn deren Kolben in zumindest eine Durchlassposition bringbar ist, in welcher er unter radialem Abstand von der Umfangswandung des Zylinders angeordnet ist, so dass die Einlassöffnung des Volumenkompensators an dem Kolben vorbei mit der Auslassöffnung verbunden ist. Folglich lassen sich die Innenwandungen des Zylinders sowie der Kolben gänzlich mit einem sie durchströmenden Reinigungsmedium in Kontakt bringen, um die vollflächig zu reinigen.

Im Übrigen kann es selbstverständlich zweckmäßig sein, wenn dem wenigstens einen Dosierauslass der Dosierkammer ein Ventil, insbesondere nach Art eines Kugelhahns, nachgeordnet ist, um den wenigstens einen Dosierauslass zumindest während der Betriebsphasen des Ansaugens und Portionierens des Produktes sowie insbesondere auch während Stillstandszeiten oder anlässlich der Inbetriebnahme der Verpackungsmaschine, wenn das Produkt teilweise bzw. gänzlich durch die Dosierkammer von deren wenigstens einem Einlass in deren wenigstens einen Auslass hindurchgeleitet wird, verschließen zu können.

Während die Dosierkammer einer erfindungsgemäßen Verpackungsmaschine selbstverständlich nur ein Dosierorgan aufnehmen kann und in diesem Fall üblicherweise einen Einlass, einen Auslass sowie einen dem Dosierorgan zugeordneten Dosierauslass aufweist, ist es insbesondere auch möglich, dass in der Dosierkammer wenigstens zwei, insbesondere genau zwei, Dosierorgane zur Dosierung von wenigstens zwei Produktportionen angeordnet sind. Die Dosierkammer weist in diesem Fall zweckmäßigerweise wenigstens zwei, insbesondere genau zwei, einem jeweiligen Dosierorgan zugeordnete Dosierauslässe auf. Während die Dosierkammer auch einen einzigen, den Dosierorganen gemeinsamen Einlass aufweisen kann, kann sie ferner vorzugsweise gleichfalls wenigstens zwei, insbesondere genau zwei, einem jeweiligen Dosierorgan zugeordnete Einlässe aufweisen, um für eine exakte Beschickung der Dosierkammer auch mit relativ hochviskosen Produkten zu sorgen. Ferner kann ein den Dosierorganen gemeinsamer Auslass der Dosierkammer oder können wenigstens zwei, einem jeweiligen Dosierorgan zugeordnete Auslässe der Dosierkammer vorgesehen sein, wobei ein gemeinsamer Auslass zur Erfüllung der ihm zugedachten Funktion in der Regel ausreicht, an welchen sich dann die Rezirkulationsleitung, vorzugsweise mit dem oben beschriebenen Volumenkompensator, anschließt.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Querschnittsansicht einer Ausführungsform einer erfindungsgemäßen Dosiereinheit einer im Übrigen nicht näher dargestellten Verpackungsmaschine zur Verpackung von flüssigen bzw. pastösen Produkten während des Betriebszustandes zu Beginn des Ansaugens des Produktes mittels des Dosierorgans;
- Fig. 2: die Dosiereinheit gemäß Fig. 1 während des Betriebszustandes am Ende des Ansaugens der gewünschten Produktportion;
- Fig. 3: die Dosiereinheit gemäß Fig. 1 und 2 unmittelbar vor Beginn des Ausbringens der dosierten Produktportion aus dem Dosierauslass der Dosierkammer;
- Fig. 4: die Dosiereinheit gemäß Fig. 1 bis 3 zu Beginn des Ausbringens der dosierten Produktportion aus dem Dosierauslass der Dosierkammer;
- Fig. 5: die Dosiereinheit gemäß Fig. 1 bis 4 am Ende des Ausbringens der dosierten Produktportion aus dem Dosierauslass der Dosierkammer; und
- Fig. 6: die Dosiereinheit gemäß Fig. 1 bis 5 während der Reinigung derselben.

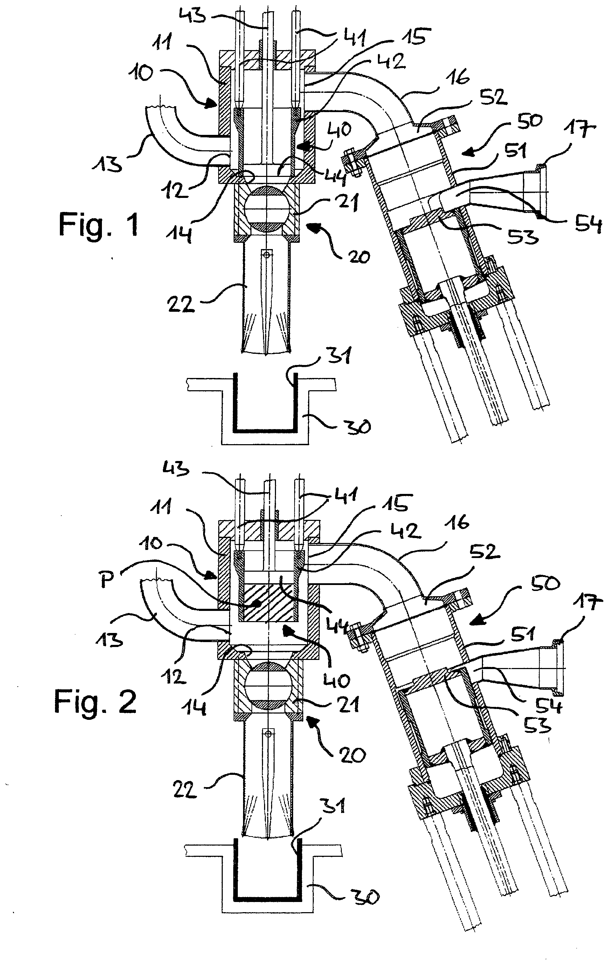

In den Fig. 1 bis 3 ist ein Ausführungsbeispiel einer Dosiereinheit einer im Übrigen nicht näher dargestellten Verpackungsmaschine zur Verpackung von gegenüber einem unzeitigen Entmischen oder Auskristallisieren empfindlichen, flüssigen und/oder pastösen Verpackungsgut, wie beispielsweise Margarine, schematisch wiedergegeben. Die Verpackungsmaschine kann im Übrigen weitgehend gemäß dem Stand der Technik ausgestaltet sein und insbesondere mehrere, parallel betriebene Dosiereinheiten der gezeigten Art aufweisen.

Die Dosiereinheit umfasst eine Dosierkammer 10, deren zylindrischen, wenngleich nicht notwendigerweise kreiszylindrisches, Gehäuse 11 einerseits einen z.B. radial in dieses einmündenden Einlass 12 aufweist, an welchen eine Einlassleitung 13 angeschlossen ist und welcher zum Aufgeben des Verpackungsgutes in die Dosierkammer 10, beispielsweise mittels einer an die Einlassleitung 13 angeschlossenen Pumpe (nicht gezeigt), dient. Das Gehäuse 11 der Dosierkammer 10 weist andererseits einen an dessen Unterseite radial ausmündenden Dosierauslass 14 auf, mittels welcher eine in der Dosierkammer 10 dosierte Produktportion aus der Dosierkammer 10 ausgebracht werden kann. An den Dosierauslass 14 unmittelbar anschließend ist ein Ventil 20 - hier in Form eines Kugelventils bzw. einer Kugelschleuse - vorgesehen, dessen Ventilgehäuse 21 z.B. direkt an dem Gehäuse 11 der Dosierkammer 10 festgelegt ist. An der dem Dosierauslass 14 entgegengesetzten Seite des Ventils 20 ist eine Dosierspitze 22 aufgesetzt. Unterhalb der Dosierspitze 22 befinden sich vertikal verlagerbare Hubzellen 30, welche zur Aufnahme von geeigneten Verpackungen 31, wie vorgefalteten und nach oben offenen Einwicklern, Bechern oder dergleichen, dienen, welchen die dosierte Produktportion aufgegeben werden kann. Die Hubzellen 30 können dabei in als solcher bekannter Weise unterhalb der Dosierspitzen 22 vorbeigefahren werden, um leere Verpackungen 31 zu- und fertig befüllte Verpackungen 31 abzuführen.

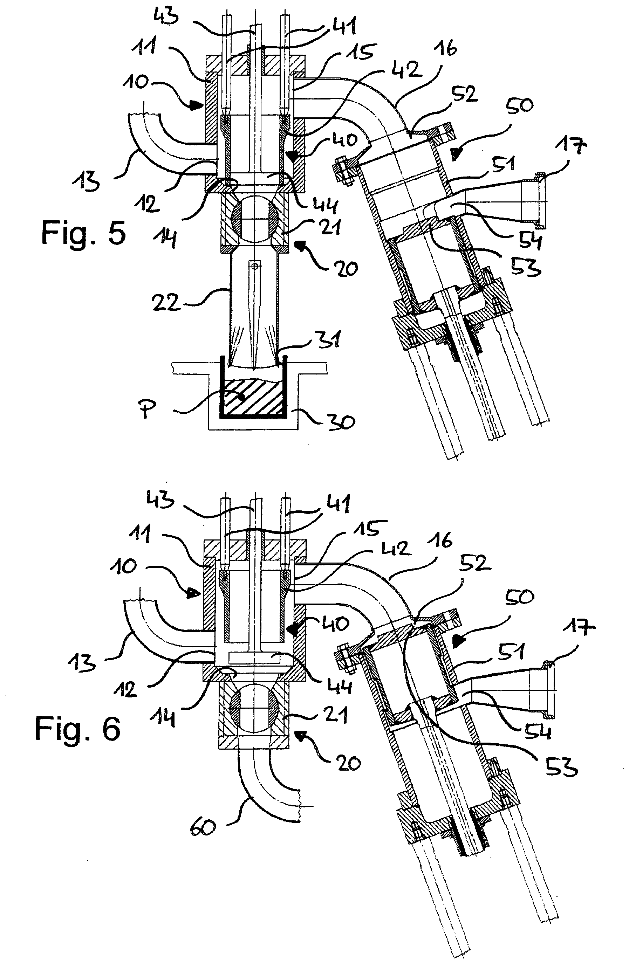

Im Innern der Dosierkammer 10 befindet sich ein Dosierorgan 40, welches beim vorliegenden Ausführungsbeispiel einerseits einen in Axialrichtung der Dosierkammer 10, beispielsweise mittels geeigneter Kolben-/Zylindereinheiten 41, verlagerbaren, an beiden Stirnseiten offenen Dosierzylinder 42, andererseits einen gleichfalls in Axialrichtung der Dosierkammer 10 sowie relativ zu dem Dosierzylinder 42, z.B. gleichfalls mittels geeigneter Kolben-/Zylindereinheiten 43, verlagerbaren Dosierkolben 44 aufweist. Der Dosierzylinder 42 ist dabei derart verlagerbar, dass seine endständige, freie (in den Zeichnungen untere) Stirnseite zum Einen mit einem den Dosierauslass 14 umgebenden Umfangsabschnitt des Gehäuses 11 der Dosierkammer 10 in dichtenden Kontakt gebracht (vgl. z.B. Fig. 1 und 3 bis 5) und zum Anderen in zumindest eine Position überführt werden kann, in welcher er mit Abstand von dem Dosierauslass 14 und insbesondere auch mit Abstand von der dem Dosierauslass 14 entgegengesetzten (in den Zeichnungen oberen) Seite des Gehäuses 11 der Dosierkammer 10 angeordnet ist (vgl. z.B. Fig. 2 und 6). Der Dosierkolben 44 ist einerseits, wie oben erwähnt, im Innern des Dosierzylinders 42 axial verlagerbar (vgl. z.B. Fig. 1 bis 5) und kann andererseits auch in eine Position verlagert werden, in welcher er sich außerhalb, wie beispielsweise unterhalb, des Dosierzylinders 42, aber mit Abstand von dem Gehäuse 11 der Dosierkammer 10 befindet (vgl. z.B. Fig. 6). Darüber hinaus ist der Dosierzylinder 42 mit allseitig radialem Abstand von der inneren Umfangswand des Gehäuses 11 der Dosierkammer 10 angeordnet, so dass zwischen letzterer und dem Außenumfang des Dosierzylinders 42 stets ein Ringspalt gebildet ist, dessen Breite vorzugsweise im Vergleich mit dem Durchmesser des Dosierzylinders 42 klein ist.

Das Gehäuse 11 der Dosierkammer 10 weist zusätzlich zu dem Einlass 12 und dem Dosierauslass 14 einen Auslass 15 auf, welcher z.B. - ähnlich dem Einlass - radial in die Dosierkammer 10 einmündet und an welchen eine Auslassleitung 16 angeschlossen ist, welche einen ersten Abschnitt einer Rezirkulations- bzw. Rückführleitung 17 bildet. Der Auslass 15 kann im vorliegenden Fall sowohl zum (gänzlichen) Durchflussbetrieb der Dosierkammer 10 während Stillstandszeiten der Verpackungsmaschine und/oder während ihrer Inbetriebnahme (der Dosierauslass 14 ist dann insbesondere mittels des Ventils 20 verschlossen) als auch zum (teilweisen) Durchflussbetrieb der Dosierkammer 10 während des üblichen Verpackungsbetriebs dienen, indem stets ein Teilstrom des über den Einlass 12 zugeführten, flüssig/viskosen bzw. pastösen Verpackungsgutes über den Auslass 15 abgeführt und wieder in den Einlass 12 rezirkuliert wird. Während der Einlass 12 im vorliegenden Fall am unteren, dem Dosierauslass 14 zugewandten Ende des Gehäuses 11 der Dosierkammer 10 positioniert ist, ist der Auslass 15 an dem dem Einlass 12 axial entgegengesetzten oberen, dem Dosierauslass 14 abgewandten Ende des Gehäuses 11 der Dosierkammer 10 angeordnet, so dass das Verpackungsgut im Wesentlichen die gesamte Dosierkammer 10 zu durchströmen vermag, ohne lokal angereichert werden zu können. Wie bereits angedeutet, mündet die an den Auslass 15 angeschlossene Auslassleitung 16 - unter Zwischenanordnung eines weiter unten näher erläuterten Volumenkompensators 50 - in die eigentliche Rezirkulations- bzw. Rückführleitung 17, welche wiederum in die Einlassleitung 13 mündet (nicht gezeigt).

An die dem Auslass 15 der Dosierkammer 10 nachgeordnete Auslassleitung 16 schließt sich ein Volumenkompensator 50 an, welcher dazu dient, den nicht notwendigerweise kontinuierlich anfallenden Teilstrom des Verpackungsgutes, mit welchem die Dosierkammer 10 während des Betriebs im Durchfluss betrieben und welcher über deren Auslass 15 abgeführt wird, zu puffern bzw. zwischenzuspeichern. Der Volumenkompensator 50 ist beim vorliegenden Ausführungsbeispiel in Form einer Kolben-/Zylindereinheit ausgebildet, deren Zylinder 51 einerseits über eine Einlassöffnung 52, welche an das dem Auslass 15 der Dosierkammer 10 abgewandte Ende der Auslassleitung 16 angeschlossen ist, andererseits über eine Auslassöffnung 54 verfügt. Der Kolben 53 der Kolben-/Zylindereinheit des Volumenkompensators 50 ist zwecks Veränderung dessen Aufnahmevolumens in Axialrichtung des Zylinders 51 verlagerbar geführt und liegt in den in Fig. 1 bis 5 wiedergegebenen Betriebszuständen der Verpackungsmaschine der inneren Umfangswandung des Zylinders 51 dichtend an. Wie aus Fig. 6 ersichtlich, lässt sich der Kolben 53 des Volumenkompensators 50 überdies in eine Durchlassposition verlagern, in welcher er sich zwischen der Einlass- 52 und der Auslassöffnung 54 befindet und unter radialem Abstand von der Umfangswandung des Zylinders 51 angeordnet ist, so dass die Einlassöffnung 52 des Volumenkompensators 50 an dem Kolben 53 vorbei mit der Auslassöffnung 54 verbunden ist, um sämtliche, mit dem Verpackungsgut in Kontakt tretenden Komponenten des Volumenkompensators 50 insbesondere in einfacher Weise spülen zu können (Fig. 6). Wie aus den Zeichnungen ersichtlich, ist dies z.B. durch zusammenwirkende radiale Ausnehmungen bzw. Vorsprünge einerseits am Außenumfang des Kolbens 53, andererseits am Innenumfang der Umfangswandung des Zylinders 51 gewährleistet.

Es sei an dieser Stelle ausdrücklich darauf hingewiesen, dass die Dosierkammer 10 insbesondere auch mehrere, beispielsweise zwei, Dosierorgane 40 aufnehmen kann, welche nebeneinander in deren Gehäuse 11 untergebracht sind (nicht zeichnerisch dargestellt). Den Dosierorganen 40, deren Aufbau mit dem der vorbeschriebenen Dosierorgane 40 identisch sein kann, ist in diesem Fall jeweils ein Dosierauslass 14 sowie vorzugsweise auch jeweils ein Einlass 12 zugeordnet, wobei grundsätzlich auch ein einziger, den Dosierorganen 40 gemeinsamer Einlass 12 vorgesehen sein kann, welcher dann zweckmäßig in einen zwischen den Dosierorganen 40 angeordneten Abschnitt der Dosierkammer 10 einmündet. An einen den Dosierorganen 40 gemeinsamen Auslass 15 der Dosierkammer 10 schließt sich dann beispielsweise der Volumenkompensator 50 an.

Nachstehend ist der Verpackungsbetrieb der Verpackungsmaschine unter Bezugnahme auf die Fig. 1 bis 5 im Einzelnen erläutert:

Das pastöse Verpackungsgut, bei welchem es sich - wie oben erwähnt - beispielsweise um gegenüber einer Entmischung und/oder Kristallisation im Ruhezustand empfindliche Margarine handeln kann, wird dem Einlass 12 der Dosierkammer 10 über die Einlassleitung 12, insbesondere im Wesentlich kontinuierlich bzw. mit einem etwa konstanten Massenstrom, zugeführt, wobei ein Hauptanteil des zugeführten Produktstromes, wie beispielsweise zwischen etwa 90 Mass.-% und etwa 98 Mass.-% desselben, in der Dosierkammer 10 mittels des Dosierorgans 40 zu einer Produktportion dosiert werden und diese Produktportion über den Dosierauslass 14 der in einer jeweiligen Hubzelle 30 angeordneten Verpackung 31 aufgegeben wird, welche in einem nachgeordneten Schritt verschlossen wird (nicht gezeigt). Der verbleibende Anteil des der Dosierkammer 10 zugeführten Produktstromes, wie z.B. zwischen etwa 2 Mass.-% und etwa 10 Mass.-% desselben, werden durch die Dosierkammer 10 hindurch aus dem Auslass 15 der Dosierkammer 10 in die Auslassleitung 16 und von dort in den Volumenkompensator 50 überführt, von wo sie in die Rezirkulationsleitung 17 und im Kreislauf schließlich wieder in die Einlassleitung 13 gelangen. Die Dosierkammer 10 ist dabei stets gänzlich mit dem pastösen Produkt befüllt.

Die in Fig. 1 dargestellte Betriebssituation stellt die Situation zu Beginn des Ansaugens einer Produktportion mittels des Dosierorgans 40 dar. Der Dosierzylinder 42 befindet sich in seiner unteren Position, in welcher er gegen den Umfang des Dosierauslasses 14 dicht anliegt; der Dosierkolben 44 befindet sich gleichfalls in seiner unteren Position, in welcher er das dem Dosierauslass 14 zugewandte (untere) Ende des Dosierzylinders 42 verschließt und mit dessen (unterem) Ende etwa fluchtet. Das Ventil 20 ist geschlossen und der Kolben 53 des Volumenkompensators 50 ist in einer Position angeordnet, dass er ein großes, z.B. das maximale, Füllvolumen des Zylinders 51 freigibt sowie einen Durchtritt des Produktes aus der Auslassöffnung 54 gewährleistet. Die mit der Verpackung 31 bestückte Hubzelle 30 befindet sich mit Abstand unterhalb der Dosierspitze 22.

Zum Ansaugen der gewünschten Produktportion wird nun der Dosierzylinder 42 des Dosierorgans 40 mittels der Kolben-/Zylindereinheiten 41 in eine obere, von dem Dosierauslass 14 beabstandete Position axial verlagert, während der Dosierkolben 44 mittels der Kolben-/Zylindereinheit 43 einerseits mit einem entsprechenden Verlagerungsweg, andererseits mit einem zusätzlichen Verlagerungsweg relativ zu dem Dosierzylinder 42 axial nach oben verlagert wird, wobei der zusätzliche Verlagerungsweg entsprechend der gewünschten, in Fig. 2 schraffiert angedeuteten Produktportion P eingestellt wird, welche sich nun innerhalb des Dosierzylinders 42 befindet. Der Kolben 53 des Volumenkompensators 50 wird dabei etwas ins Innere des Zylinders 51 hinein verlagert, so dass sich dessen Innenvolumen verkleinert, wodurch die Differenz des Volumens einerseits der mittels des Dosierorgans 40 angesaugten Produktportion P, andererseits des währenddessen der Dosierkammer 10 weiterhin über den Einlass 13 aufgegebenen Produktes kompensiert wird. Gleichwohl korrespondiert die Auslassöffnung 54 noch mit dem Innern des Zylinders 51 des Volumenkompensators 50. Die mit der Verpackung 31 bestückte Hubzelle 30 wird während des Ansaugens nach oben in Richtung der Dosierspitze 22 verlagert. Die in Fig. 2 gezeigte Betriebssituation stellt somit die Situation am Ende des Ansaugens der Produktportion P mittels des Dosierorgans 40 dar.

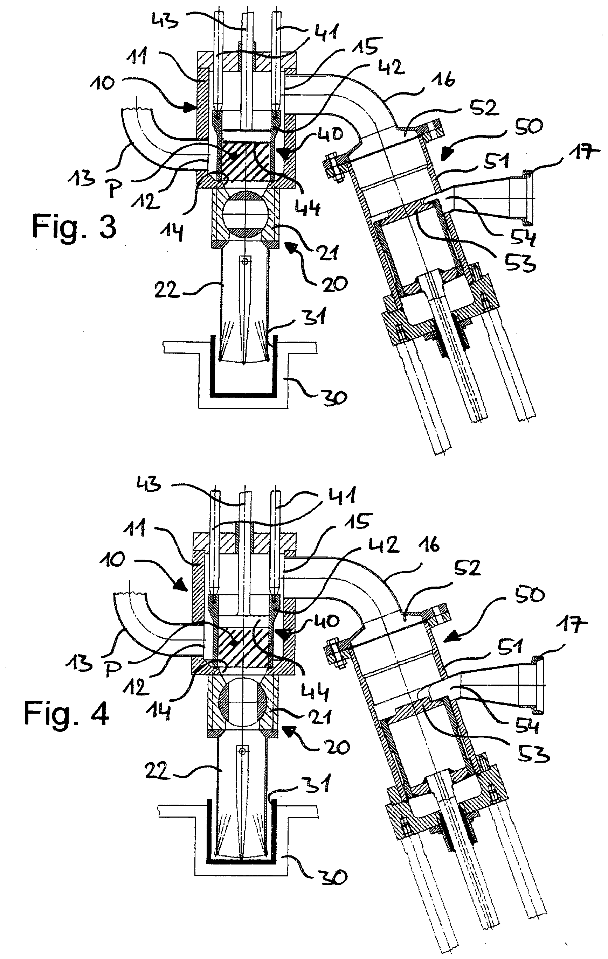

Wie der Fig. 3 zu entnehmen ist, werden nach dem Ansaugen der Produktportion P ins Innere des Dosierzylinders 42 der Dosierzylinder 42 und der Dosierkolben 44 des Dosierorgans 40 synchron nach unten in Richtung der Dosieröffnung 14 verlagert, so dass der Dosierzylinder 42 in dichtenden Kontakt mit dem Umfang des Dosierauslasses 14 gelangt, wie es auch bei der in Fig. 1 gezeigten Situation der Fall ist. Das Ventil 20 ist nach wie vor geschlossen; die Hubzelle 30 mit der Verpackung 31 ist noch weiter nach oben in Richtung der Dosierspitze 22 verlagert worden. Der Kolben 53 des Volumenkompensators 50 hat das Innenvolumen des Zylinders 51 gegenüber der Situation gemäß Fig. 2 wieder etwas vergrößert, um den der Dosierkammer 10 fortwährend über deren Einlass 12 aufgegebenen Produktstrom - bzw. genauer: den über den Auslass 15 abgeführten Anteil dieses Produktstromes - zu puffern bzw. zwischenzuspeichern.

Die Fig. 4 zeigt die Betriebssituation unmittelbar vor Beginn des Auspressens der dosierten Produktportion P aus dem Dosierauslass 14 und unterscheidet sich von der Situation gemäß Fig. 3 einerseits dadurch, dass die mit der Verpackung 31 versehene Hubzelle 30 ihre obere Position erreicht hat, in welcher die Dosierspitze 22 praktisch gänzlich in die Verpackung 31 eintaucht, um für eine steigende Produktaufgabe in die Verpackung 31 zu sorgen. Andererseits ist das Ventil 20 (gerade) geöffnet worden. Darüber hinaus hat der Kolben 53 des Volumenkompensators 50 das Innenvolumen des Zylinders 51 gegenüber der Situation gemäß Fig. 3 um ein weiteres Stück vergrößert, um den der Dosierkammer 10 fortwährend über deren Einlass 12 aufgegebenen Produktstrom bzw. dessen über den Auslass 15 abgeführten Teilstrom zu puffern.

In der Fig. 5 ist schließlich die Betriebssituation am Ende des Auspressvorgangs der Produktportion P wiedergegeben. Wie dort erkennbar, befindet sich der Dosierzylinder 42 des Dosierorgans 40 nach wie vor in der in Fig. 4 gezeigten (unteren) Position, während der Dosierkolben 44 demgegenüber nach unten in Richtung des Dosierauslasses 14 verlagert worden ist, um die dosierte Produktportion P durch das - geöffnete - Ventil 20 hindurch in die Verpackung 31 zu überführen, welche mittels der Hubzelle 30 entsprechend dem in der Verpackung 31 ansteigenden Füllniveau ein Stück nach unten, also von der Dosierspitze 22 fort, verlagert worden ist. Der Kolben 53 des Volumenkompensators 50 hat das Innenvolumen des Zylinders 51 gegenüber der Situation gemäß Fig. 4 um ein weiteres Stück vergrößert, um den der Dosierkammer 10 fortwährend über deren Einlass 12 aufgegebenen Produktstrom bzw. dessen über den Auslass 15 abgeführten Teilstrom zu puffern.

Schließlich wird die mit der dosierten Produktportion P fertig befüllte Verpackung mittels der Hubzelle 30 wieder nach unten in die in Fig. 1 wiedergegebene Stellung verlagert und abtransportiert, wonach eine neue, mit einer leeren Verpackung 31 bestückte Hubzelle 30 herbeitransportiert wird (siehe Fig. 1). Das Ventil 20 wird geschlossen, so dass sich wieder die in der Fig. 1 dargestellte Betriebssituation ergibt und sich ein neuer Dosiervorgang anschließen kann.

Die Fig. 6 zeigt die Situation der Verpackungsmaschine während eines Reinigungs- bzw. Spülvorgangs, wie er beispielsweise anlässlich eines Produktwechsels erforderlich ist. Zu diesem Zweck kann die Dosierspitze 22 z.B. von dem Gehäuse 21 des Ventils 20 abgenommen und stattdessen eine Reinigungsauslassleitung 60 an das Ventil 20 angeschlossen werden. Ein Reinigungsmedium wird der Dosierkammer 10 nun über die in deren Einlass 12 mündende Einlassleitung 13 zugeführt und einerseits über das geöffnete Ventil 20 und die an dieses angeschlossene Reinigungsauslassleitung 60, andererseits über deren Auslass 15 abgeführt, wobei das Reinigungsmedium stromab des Auslasses 15 die Auslassleitung 16, den Volumenkompensator 50 und die an dessen Auslassöffnung 54 angeschlossene Zirkulationsleitung 17 passiert. Ein vollflächiges Spülen sämtlicher, zuvor mit dem Verpackungsgut in Kontakt getretener Flächen der Verpackungsmaschine ist insbesondere dadurch möglich, dass der Dosierzylinder 42 des Dosierorgans 40 in eine - etwa der Situation der Fig. 2 entsprechende - Position verlagert wird, in welcher er mit Abstand von dem Dosierauslass 14 sowie auch mit Abstand von der dem Dosierauslass 14 axial entgegengesetzten Stirnseite des Gehäuses 11 der Dosierkammer 10 angeordnet ist, so dass er sowohl innen- als auch außenseitig von dem Reinigungsmedium umspült wird. Der Dosierkolben 44 ist in eine Stellung außerhalb des Dosierzylinders 42 sowie insbesondere sowohl mit Abstand unterhalb desselben als auch mit Abstand von dem Dosierauslass 14 verlagert worden, so dass auch er von dem Reinigungsmedium umspült wird. Entsprechendes gilt sowohl für den Zylinder 51 als auch für den Kolben 53 des Volumenkompensators 50, welcher in eine Stellung relativ zu dem Zylinder 51 verbracht worden ist, in welcher er sich zwischen der Einlassöffnung 52 und der Auslassöffnung 54 befindet und infolge der radialen bzw. mantelseitigen Ausnehmungen bzw. Vorsprünge unter Bildung eines Ringspaltes auch radial mit Abstand von der inneren Umfangswand des Zylinders 51 angeordnet ist.

Sofern das pastöse Verpackungsgut während vorübergehender Stillstandszeiten und/oder anlässlich der Inbetriebnahme der Verpackungsmaschine lediglich zirkuliert werden soll, um ein lokales Auskristallisieren/Entmischen desselben zu vermeiden (nicht zeichnerisch wiedergegeben), können der Dosierzylinder 42 und der Dosierstempel 44 des Dosierorgans 40 beispielsweise in eine Position entsprechend der Fig. 6 verbracht werden, wobei sich das Ventil 20 in einer solchen Situation freilich in der Schließstellung befindet (entsprechend Fig. 1 bis 3). Der Kolben 53 des Volumenkompensators 50 kann zu diesem Zweck beispielsweise in eine der Fig. 5 entsprechende Stellung verlagert werden, in welcher der die Auslassöffnung 54 praktisch gänzlich freigibt und somit einen ungehinderten Durchlass des Produktes gewährleistet, welches nach Durchströmen der Dosierkammer 10 den Volumenkompensator durchfließt.

## Patentansprüche

1. Verfahren zur portionierten Verpackung von flüssigen und/oder pastösen Produkten mittels einer Verpackungsmaschine, indem das Produkt über wenigstens einen Einlass (12) einer Dosierkammer (10) aufgegeben, in der Dosierkammer (10) mittels wenigstens eines Dosierorgans (40) mit einem in Axialrichtung der Dosierkammer (10) verlagerbaren Dosierkolben (44) zu wenigstens einer Produktportion (P) dosiert und die wenigstens eine Produktportion (P) über wenigstens einen Dosierauslass (14) einer Verpackung (31) aufgegeben wird, wobei die Dosierkammer (10) in zumindest einem Betriebszustand der Verpackungsmaschine aus der Gruppe
- Stillstandszeiten der Verpackungsmaschine,
- Inbetriebnahme der Verpackungsmaschine und
- Betrieb der Verpackungsmaschine
im Durchfluss betrieben wird, indem das Produkt der Dosierkammer (10) gänzlich oder anteilig über wenigstens einen Auslass (15) abgeführt und rezirkuliert wird, **dadurch gekennzeichnet, dass** die Dosierkammer (10) in axialer Richtung mit dem Produkt durchströmt wird, indem es ihrem wenigstens einen Ende über den wenigstens einen Einlass (12) aufgegeben und ihrem anderen Ende über den wenigstens einen Auslass (15) abgeführt wird, wobei das Produkt durch einen zwischen dem wenigstens einen, in der Dosierkammer (10) befindlichen Dosierorgan (40) und der inneren Umfangswand der Dosierkammer (10) gebildeten Ringspalt an dem wenigstens einen Dosierorgan (40) vorbei geführt wird, so dass es das Dosierorgan (40) umspült.

2. Verfahren nach Anspruch 1, **dadurch gekennzeichnet, dass** die Dosierkammer (10) sowohl während Stillstandszeiten und/oder bei Inbetriebnahme der Verpackungsmaschine als auch während des Betriebs der Verpackungsmaschine im Durchfluss betrieben wird.

3. Verfahren nach Anspruch 1 oder 2, **dadurch gekennzeichnet, dass** das Produkt dem unteren und/oder dem wenigstens einen Dosierauslass (14) zugewandten Ende der Dosierkammer (10) über den wenigstens einen Einlass (12) aufgegeben und dem oberen und/oder dem wenigstens einen Dosierauslass (14) abgewandten Ende der Dosierkammer (10) über den wenigstens einen Auslass (15) abgeführt wird.

4. Verfahren nach einem der Ansprüche 1 bis 3, **dadurch gekennzeichnet, dass** der Dosierkammer (10) während des Betriebs, insbesondere im Wesentlichen kontinuierlich, ein größerer Produktstrom über den wenigstens einen Einlass (12) aufgegeben wird als ihr über den wenigstens einen Dosierauslass (14) portioniert abgeführt wird, wobei der Anteil des der Dosierkammer (10) aufgegebenen Produktstromes, welcher ihr nicht über den wenigstens einen Dosierauslass (14) portioniert abgeführt wird, über den wenigstens einen Auslass (15) abgeführt und rezirkuliert wird.

5. Verfahren nach Anspruch 4, **dadurch gekennzeichnet, dass** der gewünschte Anteil des der Dosierkammer (10) aufgegebenen Produktstromes, welcher über den wenigstens einen Auslass (15) abgeführt und rezirkuliert wird, voreingestellt wird.

6. Verfahren nach Anspruch 4 oder 5, **dadurch gekennzeichnet, dass** zwischen 1 Mass.-% und 20 Mass.-%, insbesondere zwischen 2 Mass.-% und 10 Mass.-%, des der Dosierkammer (10) über deren wenigstens einen Einlass (12) zugeführten Produktstromes an dem wenigstens einen Dosierorgan (40) vorbei wieder über den wenigstens einen Auslass (15) abgeführt werden, während zwischen 80 Mass.-% und 99 Mass.-%, insbesondere zwischen 90 Mass.-% und 98 Mass.-%, des zugeführten Produktstromes mittels des wenigstens einen Dosierorgans (40) dosiert und portioniert über den wenigstens einen Dosierauslass (14) einer Verpackung aufgegeben werden.

7. Verfahren nach einem der Ansprüche 4 bis 6, **dadurch gekennzeichnet, dass** der Anteil des der Dosierkammer (10) über den wenigstens einen Auslass (15) abgeführten Produktstromes in einem dem Auslass (15) nachgeordneten Volumenkompensator (50) gepuffert wird.

8. Verpackungsmaschine zur portionierten Verpackung von flüssigen und/oder pastösen Produkten, insbesondere zur Durchführung eines Verfahrens nach einem der vorangehenden Ansprüche, mit wenigstens einer Dosierkammer (10) mit wenigstens einem Einlass (12), um das Produkt der Dosierkammer (10) aufzugeben, wenigstens einem in der Dosierkammer (10) angeordneten Dosierorgan (40) mit einem in Axialrichtung der Dosierkammer (10) verlagerbaren Dosierkolben (44) zur Dosierung wenigstens einer Produktportion (P) und mit wenigstens einem Dosierauslass (14), um die Produktportion (P) einer Verpackung (31) aufzugeben, wobei die Dosierkammer (10) ferner wenigstens einen Auslass (15) aufweist, welcher in eine Rezirkulationsleitung (17) mündet, wobei das Produkt über den wenigstens einen Einlass (12) der Dosierkammer (10) zuführbar und gänzlich oder anteilig über den wenigstens einen Auslass (15) in die Rezirkulationsleitung (17) abführbar ist, **dadurch gekennzeichnet, dass** der wenigstens eine Einlass (12) und der wenigstens eine Auslass (15) an in axialer Richtung entgegengesetzten Enden der Dosierkammer (10) angeordnet sind, wobei das wenigstens eine Dosierorgan (40) mit einem radialen Abstand von der Umfangswand der Dosierkammer (10) angeordnet ist, so dass das Produkt durch einen zwischen dem wenigstens einen, in der Dosierkammer (10) befindlichen Dosierorgan (40) und der inneren Umfangswand der Dosierkammer (10) gebildeten Ringspalt an dem wenigstens einen Dosierorgan (40) vorbei führbar ist.

9. Verpackungsmaschine nach Anspruch 8, **dadurch gekennzeichnet, dass** der wenigstens eine Einlass (12) an dem unteren und/oder dem wenigstens einen Dosierauslass (14) zugewandten Ende und der wenigstens eine Auslass (15) an dem oberen und/oder dem wenigstens einen Dosierauslass (14) abgewandten Ende der Dosierkammer (10) angeordnet sind.

10. Verpackungsmaschine nach Anspruch 8 oder 9, **dadurch gekennzeichnet, dass** das wenigstens eine Dosierorgan (40) mit einem gegenüber dem Gesamtquerschnitt der Dosierkammer (10) kleinen radialen Abstand von der Umfangswand der Dosierkammer (10) angeordnet ist.

11. Verpackungsmaschine nach einem der Ansprüche 8 bis 10, **dadurch gekennzeichnet, dass** das wenigstens eine Dosierorgan (40) einerseits einen in Axialrichtung der Dosierkammer (10) verlagerbaren Dosierzylinder (42) aufweist, dessen freie Stirnseite in einer Dosierposition mit einem Umfangsabschnitt des wenigstens einen Dosierauslasses (14) in dichtenden Kontakt bringbar ist, und dass das wenigstens eine Dosierorgan (40) andererseits einen in dem Dosierzylinder (42) in Axialrichtung verlagerbaren Dosierkolben (44) aufweist.

12. Verpackungsmaschine nach Anspruch 11, **dadurch gekennzeichnet, dass**
- der im Innern der Dosierkammer (10) angeordnete Dosierkolben (44) des wenigstens einen Dosierorgans (40) in eine Position außerhalb des Dosierzylinders (42) und/oder
- der im Innern der Dosierkammer (10) angeordnete Dosierzylinder (42) des wenigstens einen Dosierorgans (40) in eine Position, in welcher er sowohl radial als auch axial gänzlich von den Wandungen der Dosierkammer (10) mit Abstand angeordnet ist,
bringbar ist bzw. sind.

13. Verpackungsmaschine nach einem der Ansprüche 8 bis 12, **dadurch gekennzeichnet, dass** dem wenigstens einen Auslass (15) ein Volumenkompensator (50) nachgeordnet ist, um das aus der Dosierkammer (10) über den Auslass (15) abgeführte Produkt zu puffern, wobei der Volumenkompensator (50) eine Kolben-/Zylindereinheit umfasst, deren Kolben (53) in Bezug auf den Zylinder (51) verlagerbar ist, um das Volumen des Volumenkompensators (50) zu verändern, wobei der Kolben (53) der Kolben-/Zylindereinheit insbesondere in zumindest eine Durchlassposition bringbar ist, in welcher er unter radialem Abstand von der Umfangswandung des Zylinders (51) angeordnet ist, so dass die Einlassöffnung (52) des Volumenkompensators (50) an dem Kolben (53) vorbei mit der Auslassöffnung (54) verbunden ist.

14. Verpackungsmaschine nach einem der Ansprüche 8 bis 13, **dadurch gekennzeichnet, dass** dem wenigstens einen Dosierauslass (14) der Dosierkammer (10) ein Ventil (20), insbesondere nach Art eines Kugelhahns, nachgeordnet ist.

15. Verpackungsmaschine nach einem der Ansprüche 8 bis 14, **dadurch gekennzeichnet, dass** in der Dosierkammer (10) wenigstens zwei oder genau zwei Dosierorgane (40) zur Dosierung von wenigstens zwei Produktportionen (P) angeordnet sind, wobei die Dosierkammer (10) insbesondere
- wenigstens zwei oder genau zwei einem jeweiligen Dosierorgan (40) zugeordnete Dosierauslässe (14) und/oder
- wenigstens zwei oder genau zwei einem jeweiligen Dosierorgan (40) zugeordnete Einlässe (12)
aufweist.

## Claims

1. A method for the portioned packaging of liquid and/or pasty products by means of a packaging machine by the product being fed via at least one inlet (12) to a metering chamber (10), being metered in the metering chamber (10) by means of at least one metering member (40) with a metering piston (44) being shiftable in the axial direction of the metering chamber (10) to form at least one product portion (P) and the at least one product portion (P) being fed via at least one metering outlet (14) to a package (31), wherein the metering chamber (10) is operated in a continuous flow in at least one operating state of the packaging machine from the following group
- downtimes of the packaging machine,
- start-up of the packaging machine, and
- operation of the packaging machine,
by the product being removed entirely or partially from the metering chamber (10) via at least one outlet (15) and being recirculated, **characterized in that** the product flows through the metering chamber (10) in the axial direction by said product being fed to its at least one end via the at least one inlet (12) and being removed from its other end via the at least one outlet (15), wherein the product is guided past the at least one metering member (40) through an annular gap formed between the at least one metering member (40) located in the metering chamber (10) and the inner circumferential wall of the metering chamber (10), and therefore said product flushes around the metering member (40).

2. The method as claimed in claim 1, **characterized in that** the metering chamber (10) is operated in continuous flow both during downtimes and/or upon start-up of the packaging machine and also during the operation of the packaging machine.

3. The method as claimed in claim 1 or 2, **characterized in that** the product is fed to the lower end and/or end facing the at least one metering outlet (14) of the metering chamber (10) via the at least one inlet (12) and is removed from the upper end and/or end facing away from the at least one metering outlet (14) of the metering chamber (10) via the at least one outlet (15).

4. The method as claimed in one of claims 1 to 3,
**characterized in that** a greater product flow is fed to the metering chamber (10) during the operation, in particular substantially continuously, via the at least one inlet (12) than is removed in a portioned manner therefrom via the at least one metering outlet (14), wherein the portion of the product flow fed to the metering chamber (10) that is not removed in a portioned manner therefrom via the at least one metering outlet (14) is removed via the at least one outlet (15) and recirculated.

5. The method as claimed in claim 4, **characterized in that** the desired portion of the product flow fed to the metering chamber (10) that is removed via the at least one outlet (15) and recirculated is preset.

6. The method as claimed in claim 4 or 5, **characterized in that** between 1% by mass and 20% by mass, in particular between 2% by mass and 10% by mass, of the product flow supplied to the metering chamber (10) via at least one outlet (12) thereof is removed again past the at least one metering member (40) via the at least one outlet (15), while between 80% by mass and 99% by mass, in particular between 90% by mass and 98% by mass, of the supplied product flow is fed by means of the at least one metering member (40) in a metered and portioned manner via the at least one metering outlet (14) to a package.

7. The method as claimed in one of claims 4 to 6,
**characterized in that** the portion of the product flow removed from the metering chamber (10) via the at least one outlet (15) is buffered in a volume compensator (50) downstream of the outlet (15).

8. A packaging machine for the portioned packaging of liquid and/or pasty products, in particular for carrying out a method as claimed in one of the preceding claims, with at least one metering chamber (10) with at least one inlet (12) in order to feed the product to the metering chamber (10), at least one metering member (40) which is arranged in the metering chamber (10) with a metering piston (44)) being shiftable in the axial direction of the metering chamber (10) for metering at least one product portion (P), and with at least one metering outlet (14) in order to feed the product portion (P) to a package (31), wherein the metering chamber (10) furthermore has at least one outlet (15) which leads into a recirculation line (17), wherein the product can be supplied to the metering chamber (10) via the at least one inlet (12) and can be entirely or partially removed via the at least one outlet (15) into the recirculation line (17), **characterized in that** the at least one inlet (12) and the at least one outlet (15) are arranged at opposite ends of the metering chamber (10) in the axial direction, wherein the at least one metering member (40) is arranged at a radial distance from the circumferential wall of the metering chamber (10) such that the product can be guided past the at least one metering member (40) through an annular gap formed between the at least one metering member (40) located in the metering chamber (10) and the inner circumferential wall of the metering chamber (10).

9. The packaging machine as claimed in claim 8,
**characterized in that** the at least one inlet (12) is arranged at the lower end and/or end facing the at least one metering outlet (14), and the at least one outlet (15) is arranged at the upper end and/or end facing away from the at least one metering outlet (14) of the metering chamber (10).

10. The packaging machine as claimed in claim 8 or 9,
**characterized in that** the at least one metering member (40) is arranged at a small radial distance, in relation to the entire cross section of the metering chamber (10), from the circumferential wall of the metering chamber (10).

11. The packaging machine as claimed in one of claims 8 to 10, **characterized in that** the at least one metering member (40) firstly has a metering cylinder (42) which is shiftable in the axial direction of the metering chamber (10) and the free end side of which can be brought in a metering position into sealing contact with a circumferential portion of the at least one metering outlet (14), and **in that** the at least one metering member (40) secondly has a metering piston (44) which is shiftable in the axial direction in the metering cylinder (42).

12. The packaging machine as claimed in claim 11,
**characterized in that**
- the metering piston (44) of the at least one metering member (40), which metering piston is arranged in the interior of the metering chamber (10) can be brought into a position outside the metering cylinder (42), and/or
- the metering cylinder (42) of the at least one metering member (40), which metering cylinder is arranged in the interior of the metering chamber (10), can be brought into a position in which it is arranged at a significant distance both radially and axially from the walls of the metering chamber (10).

13. The packaging machine as claimed in one of claims 8 to 12, **characterized in that** a volume compensator (50) is arranged downstream of the at least one outlet (15) in order to buffer the product removed from the metering chamber (10) via the outlet (15), wherein the volume compensator (50) comprises a piston/cylinder unit, the piston (53) of which is shiftable with respect to the cylinder (51) in order to change the volume of the volume compensator (50), wherein the piston (53) of the piston/cylinder unit in particular can be brought into at least one passage position in which it is arranged at a radial distance from the circumferential wall of the cylinder (51), and therefore the inlet opening (52) of the volume compensator (50) is connected past the piston (53) to the outlet opening (54).

14. The packaging machine as claimed in one of claims 8 to 13, **characterized in that** a valve (20), in particular in the manner of a ballcock, is arranged downstream of the at least metering outlet (14).

15. The packaging machine as claimed in one of claims 8 to 14, **characterized in that** at least two, or precisely two, metering members (40) for metering at least two product portions (P) are arranged in the metering chamber (10), wherein the metering chamber (10) has in particular
- at least two, or precisely two, metering outlets (14) assigned to a respective metering member (40), and/or
- at least two, or precisely two, inlets (12) assigned to a respective metering member (40).

## Revendications

1. Procédé d'emballage en portions de produits fluides et/ou pâteux à l'aide d'une machine d'emballage, le produit étant amené à une chambre de dosage (10) via au moins une admission (12), puis dosé dans la chambre de dosage (10) à l'aide d'au moins un organe de dosage (40) doté d'un piston de dosage (44) pouvant se déplacer dans la direction axiale de la chambre de dosage (10) pour réaliser au moins une portion de produit (P) et l'au moins une portion de produit (P) étant amenée, via au moins une sortie de dosage (14), à un emballage (31), la chambre de dosage (10) étant entraînée en mode de circulation de flux dans au moins un état de fonctionnement de la machine d'emballage appartenant au groupe :
- temps d'arrêt de la machine d'emballage ;
- démarrage de la machine d'emballage ; et
- fonctionnement de la machine d'emballage ;
le produit étant évacué entièrement ou en partie de la chambre de dosage (10) via au moins une sortie (15) et remis en circulation, **caractérisé en ce que** la chambre de dosage (10) est traversée dans la direction axiale par le produit, celui-ci étant amené à son au moins une extrémité via l'au moins une admission (12) et évacué par son autre extrémité via l'au moins une sortie (15), le produit étant guidé, en passant par l'au moins un organe de dosage (40), au travers d'une fente annulaire formée entre l'au moins un organe de dosage (40) se trouvant dans la chambre de dosage (10) et la paroi périphérique intérieure de la chambre de dosage (10), de façon à envelopper l'organe de dosage (40).

2. Procédé selon la revendication 1, **caractérisé en ce que** la chambre de dosage (10) est entraînée en mode de circulation de flux tant pendant les temps d'arrêt et/ou que lors du démarrage de la machine d'emballage ainsi que lors du fonctionnement de la machine d'emballage.

3. Procédé selon la revendication 1 ou 2, **caractérisé en ce que** le produit est amené à l'extrémité, inférieure et/ou orientée vers l'au moins une sortie de dosage (14), de la chambre de dosage (10) via l'au moins une admission (12) et est évacué par l'extrémité, supérieure et/ou opposée à l'au moins une sortie de dosage (14), de la chambre de dosage (10) via l'au moins une sortie (15).

4. Procédé selon l'une quelconque des revendications 1 à 3, **caractérisé en ce qu'**un flux de produit plus important est amené à la chambre de dosage (10) via l'au moins une admission (12) pendant le fonctionnement, notamment pour l'essentiel en continu, qu'il n'en est évacué en portions via l'au moins une sortie de dosage (14), la partie du flux de produit amenée à la chambre de dosage (10) n'étant pas évacuée sous forme de portions via l'au moins une sortie de dosage (14) étant évacuée via l'au moins une sortie (15) et remise en circulation.

5. Procédé selon la revendication 4, **caractérisé en ce que** la partie souhaitée de flux de produit amené à la chambre de dosage (10) évacuée via l'au moins une sortie (15) et remise en circulation est réglée au préalable.

6. Procédé selon la revendication 4 ou 5, **caractérisé en ce que** entre 1 % en masse et 20 % en masse, notamment entre 2 % en masse et 10 % en masse du flux de produit amené à la chambre de dosage (10) via son au moins une admission (12) est évacué, en passant par l'au moins un organe de dosage (40), via l'au moins une sortie (15), tandis qu'entre 80 % en masse et 99 % en masse, notamment entre 90 % en masse et 98 % en masse du flux de produit amené est dosé à l'aide de l'au moins un organe de dosage (40) et amené en portions à un emballage via l'au moins une sortie de dosage (14).

7. Procédé selon l'une quelconque des revendications 4 à 6, **caractérisé en ce que** la partie du flux de produit évacuée de la chambre de dosage (10) via l'au moins une sortie (15) est stockée de façon temporaire dans un compensateur de volume (50) placé en aval de la sortie (15).

8. Machine d'emballage servant à l'emballage en portions de produits fluides et/ou pâteux, notamment à la mise en oeuvre d'un procédé selon l'une quelconque des revendications précédentes, avec au moins une chambre de dosage (10) doté d'au moins une admission (12), pour amener le produit à la chambre de dosage (10), avec au moins un organe de dosage (40) disposé dans la chambre de dosage (10) doté d'un piston de dosage (44) pouvant se déplacer dans la direction axiale de la chambre de dosage (10) pour doser au moins une portion de produit (P) et avec au moins une sortie de dosage (14) pour amener la portion de produit (P) à un emballage (31), la chambre de dosage (10) comportant en outre au moins une sortie (15) débouchant dans une conduite de recirculation (17), le produit pouvant être amené, via l'au moins une admission (12), à la chambre de dosage (10) et pouvant être évacué entièrement ou en partie dans la conduite de recirculation (17) via l'au moins une sortie (15), **caractérisée en ce que** l'au moins une admission (12) et l'au moins une sortie (15) sont disposées au niveau des extrémités opposées dans la direction axiale de la chambre de dosage (10), l'au moins un organe de dosage (40) étant disposé à une certaine distance radiale de la paroi périphérique de la chambre de dosage (10), de sorte que le produit puisse être guidé plus en avant au niveau de l'au moins un organe de dosage (40) à travers une fente annulaire formée entre l'au moins un organe de dosage (40) se trouvant dans la chambre de dosage (10) et la paroi périphérique intérieure de la chambre de dosage (10).

9. Machine d'emballage selon la revendication 8, **caractérisée en ce que** l'au moins une admission (12) est disposée au niveau de l'extrémité, inférieure et/ou orientée vers l'au moins une sortie de dosage (14), de la chambre de dosage (10) et que l'au moins une sortie (15) est disposée au niveau de l'extrémité supérieure et/ou opposée à l'au moins une sortie de dosage (14).

10. Machine d'emballage selon la revendication 8 ou 9, **caractérisée en ce que** l'au moins un organe de dosage (40) est disposé à une petite distance radiale de la section transversale totale de la chambre de dosage (10) par rapport à la paroi périphérique de la chambre de dosage (10).

11. Machine d'emballage selon l'une quelconque des revendications 8 à 10, **caractérisée en ce que** l'au moins un organe de dosage (40) comporte d'une part un cylindre de dosage (42) pouvant se déplacer dans la direction axiale de la chambre de dosage (10) dont le côté avant libre peut être placé en contact étanche dans une position de dosage avec une section périphérique de l'au moins une sortie de dosage (14) et que l'au moins un organe de dosage (40) comporte d'autre part un piston de dosage (44) pouvant se déplacer dans le cylindre de dosage (42) dans la direction axiale.

12. Machine d'emballage selon la revendication 11, **caractérisée en ce que** :
- le piston de dosage (44), disposé à l'intérieur de la chambre de dosage (10), de l'au moins un organe de dosage (40) peut être placé dans une position à l'extérieur du cylindre de dosage (42) ; et/ou
- le cylindre de dosage (42), disposé à l'intérieur de la chambre de dosage (10), de l'au moins un organe de dosage (40) peut être placé dans une position dans laquelle il est disposé entièrement à une certaine distance des parois de la chambre de dosage (10), tant dans le plan radial que dans le plan axial.

13. Machine d'emballage selon l'une quelconque des revendications 8 à 12, **caractérisée en ce qu'**un compensateur de volume (50) est placé en aval de l'au moins une sortie (15), pour stocker de façon temporaire le produit évacué de la chambre de dosage (10) via la sortie (15), le compensateur de volume (50) comprenant une unité piston/cylindre dont le piston (53) peut se déplacer par rapport au cylindre (51) pour faire varier le volume du compensateur de volume (50), le piston (53) de l'unité piston/cylindre pouvant notamment être placé dans au moins une position de passage dans laquelle il est disposé à une certaine distance radiale de la paroi périphérique du cylindre (51), de sorte que l'ouverture d'admission (52) du compensateur de volume (50) soit reliée à l'ouverture de sortie (54) en passant au niveau du piston (53).

14. Machine d'emballage selon l'une quelconque des revendications 8 à 13, **caractérisée en ce qu'**une soupape (20), notamment de type robinet à rotule, est placée en aval de l'au moins une sortie de dosage (14) de la chambre de dosage (10).

15. Machine d'emballage selon l'une quelconque des revendications 8 à 14, **caractérisée en ce qu'**au moins deux ou précisément deux organes de dosage (40) sont disposés dans la chambre de dosage (10) pour doser au moins deux portions de produit (P), la chambre de dosage (10) comportant notamment :
- au moins deux ou précisément deux sorties de dosage (14) associées à un organe de dosage (40) respectif ; et/ou
- au moins deux ou précisément deux admissions (12) associées à un organe de dosage (40) respectif.
